# EUROPEAN PATENT APPLICATION

(11) **EP 2 528 148 A1**
(43) Date of publication of application: **28.11.2012**
(21) Application number: 11734719.5
(22) Date of filing: 20.01.2011
(51) Int. Cl.: H01M 4/62, H01M 4/14

(54) **NEGATIVE ELECTRODE PLATE FOR LEAD STORAGE BATTERY, PROCESS FOR PRODUCING SAME, AND LEAD STORAGE BATTERY**

(30) Priority: 21.01.2010 JP 2010011471
(71) Applicant: GS Yuasa International Ltd., Kyoto-shi, Kyoto 601-8520 (JP)
(72) Inventor: FUJIWARA, Yoshiomi, Kyoto-shi Kyoto 601-8520 (JP)
(74) Representative: Vossius & Partner
(86) International application number: PCT/JP2011/050972
(87) International publication number: WO 2011/090113

(57) **Abstract**

To provide a lead-acid battery in which influences by sulfation of a negative electrode plate are reduced to improve cycle life performance in PSOC (Partial State of Charge). A lead-acid battery includes a negative electrode plate containing carbon black, fibrous carbon and graphite in a negative active material thereof. The average primary particle size of the carbon black is 10 nm or more and 120 nm or less, and the content thereof is 0.05% by mass or more and 2.2% by mass or less based on the mass of negative active material. The average length of the fibrous carbon is 1 µm or more, and the content thereof is 0.02% by mass or more and 1.2% by mass or less based on the mass of negative active material. The average particle size of the graphite is 20 µm or more, and the content thereof is 0.02% by mass or more and 2.0% by mass or less based on the mass of negative active material.

## Description

### TECHNICAL FIELD

The present invention relates to a lead-acid battery having a feature in an active material of a negative electrode plate (hereinafter referred to as "negative active material" for improving the life property of the lead-acid battery.

### BACKGROUND ART

In recent years, lead-acid batteries mounted on buses and automobiles have come to undergo frequently repeated charge-discharge in an incompletely charged state (hereinafter referred to as "partial state of charge") as represented by stop idling, and have been increasingly used under conditions severer than ever. Accordingly, a further improvement of battery properties, especially the life property is required.

The life property of a lead-acid battery significantly depends on the configuration of positive electrode plates and negative electrode plates as electrodes. For instance, Patent Document 1 discloses addition of carbon fine particles to a positive electrode and a negative active material for preventing a reduction in capacity associated with charge-discharge of a secondary battery, reducing an internal resistance and increasing the capacity of the battery. Patent Document 2 discloses addition of carbon whiskers or graphite whiskers which meet a predetermined requirement to a negative active material for improving efficiency of utilization of the negative active material to achieve high weight efficiency and volume efficiency and improving the life property. Patent Document 3 discloses incorporation of carbon particles which meet a predetermined requirement into a negative active material for improving the life property concerning lead-acid batteries.

### PRIOR ART DOCUMENTS

### PATENT DOCUMENTS

Patent Document 1: Japanese Patent Laid-Open No. 10-241677
Patent Document 2: Japanese Patent Laid-Open No. 06-140043
Patent Document 3: Japanese Patent Laid-Open No. 2002-343359

### DISCLOSURE OF THE INVENTION

### PROBLEMS TO BE SOLVED BY THE INVENTION

Lead-acid batteries are known to have crystals of lead sulfate generated at both positive and negative electrodes by a discharge reaction, and are hard to be charged as generated crystals of lead sulfate gradually become bulky especially in a negative active material when used in a partial state of charge. The crystals of lead sulfate are not only passive and hence electrically resistant, but also increase in volume by a factor of about 2.7 compared to a lead that is a negative active material before discharge, and therefore become a cause of reducing the conductivity of an overall negative electrode plate. Consequently, the lead-acid battery is hard to be charged, which becomes a cause of degrading the life property. A phenomenon in which lead sulfate is hard to be charged in a negative active material as described above is called sulfation.

The life property of the lead-acid battery, when charged and discharged in a partial state of charge, is an important factor in evaluation of battery properties. Attempts have been made to add a conductive material such as carbon in a negative active material for improving the life property of the lead-acid battery as described above. However, mere addition of carbon in an active material has not adequately improved the life property. This may be because although carbon is added in an active material, its conductivity cannot be adequately retained.

The present invention has been made in view of the situations described above, and has as its object the provision of a negative electrode plate for a lead-acid battery which improves the life property of a lead-acid battery when charged and discharged in a partial state of charge.

### SOLUTIONS TO THE PROBLEMS

A negative electrode plate for a lead-acid battery according to the present invention is a negative electrode plate for a lead-acid battery which comprises a negative active material, wherein said negative active material is provided with lead sulfate particles, and contains all of a microparticulate material A deposited on said surfaces of the lead sulfate particles to impart a conductivity, a fibrous material B crosslinking between crystals of said lead sulfate to impart a conductivity and a macroparticulate material C having a low solubility in an electrolyte solution of said lead-acid battery and a size greater than said fibrous material B.
The negative electrode plate of the present invention may be provided with lead sulfate particles when a lead-acid battery is brought into a partial state of charge under the condition of being incorporated in the lead-acid battery. Thus, the negative electrode plate of the present invention may contain no lead sulfate particles in the state of being fully charged in the lead-acid battery. Lead sulfate particles provided in the negative electrode plate of the present invention are preferably lead sulfate particles that are formed when the negative electrode plate is brought into a partial state of charge in the lead-acid battery.

The microparticulate material A, the fibrous material B and the macroparticulate material C refer to three kinds of materials that are very different in "size and form (aspect)" for imparting a conductivity to a negative electrode plate for a lead-acid battery containing crystallized lead sulfate from microscopic and macroscopic viewpoints. In principle, the microparticulate material A is a microparticle that is deposited on the surface of a non-conductive crystallized lead sulfate particle to impart a conductivity, the fibrous material B is a fibrous particle that contacts at least two lead sulfate particles, and the macroparticulate material C is a macroparticle that contacts at least three lead sulfate particles. Specific examples of materials having such properties correspond to carbon black, fibrous carbon and graphite, respectively.

A microparticulate material such as carbon black is deposited on the surface of crystallized lead sulfate in such a manner as to stick thereto, and imparts a conductivity to lead sulfate which is electrically resistant in the negative active material. A fibrous material such as fibrous carbon crosslinks between multiple crystals of lead sulfate, and imparts a conductivity to between crystals of lead sulfate. A macroparticulate material such as graphite crosslinks between multiple crystals of lead sulfate present at a remote distance, which cannot be crosslinked by the above-mentioned carbon black and fibrous carbon, and establishes a broader conductivity network. Further, macroparticles are present in such a manner that they are themselves covered with the active material, and are therefore harder to escape outside from the active material than small particles such as carbon black and fibrous carbon. Thus, by incorporating of these materials into the negative active material, the conductivity network is maintained for a long time period.

That is, the negative electrode plate for a lead-acid battery according to the present invention is constituted such that the progress of sulfation is considerably retarded and the life property is harder to be degraded even if charge-discharge is repeated in a partial state of charge, by adding three kinds of materials that are very different in size and form.

A method for producing a negative electrode plate for a lead-acid battery according to the present invention comprises a blending step S1 of mixing a lead powder consisting of a mixture of lead and lead oxide, a conductive microparticulate material A having an average particle size of 10 nm or more and 120 nm or less, a conductive fibrous material B having an average length of 1 µm or more and 20 µm or less, a macroparticulate material C having an average particle size of 20 nm or more and 200 nm or less, and other additives. The method for producing a negative electrode plate for a lead-acid battery according to the present invention can comprise a step of adding one or both of water and diluted sulfuric acid to the mixture obtained in the blending step S1 and mixing the resultant mixture (mixing step S2), and when both water and diluted sulfuric acid are added, it is preferable to add water and mix the resultant mixture, followed by adding dropwise diluted sulfuric acid and mixing the resultant mixture again. The method for producing a negative electrode plate for a lead-acid battery according to the present invention preferably comprises a curing/drying step S3 of filling the mixture obtained in the mixing step S2 (also referred to as paste of negative active material) in a lattice to be cured and then drying the same, and preferably comprises a formation step S4 of placing in a sulfuric acid electrolyte solution a unformed negative electrode plate after undergoing the curing/drying step S3, and passing a direct current between the negative electrode plate and a positive electrode. The formation step S4 can be carried out by passing a direct current through an unformed battery prepared by a step (assembly step) of alternately combining the unformed negative electrode plate prepared through the curing/drying step and a separately prepared unformed positive electrode plate with a separator interposed therebetween, and inserting the resulting combination into a container, followed by mounting a lid.

### ADVANTAGES OF THE INVENTION

A lead-acid battery according to the present invention can suppress a degradation in life property of the lead-acid battery even if charge-discharge is repeated in a partial state of charge.

### BRIEF DESCRIPTION OF DRAWING

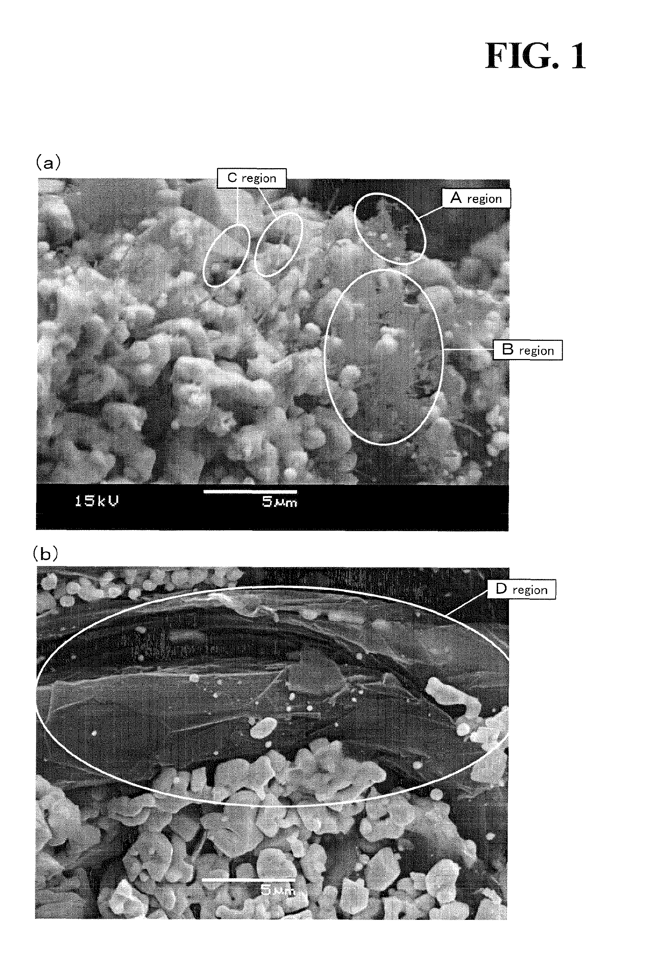

[Figure 1] Figure 1 shows images when observing a cut-out section of a negative electrode plate of a lead-acid battery of a first embodiment by a scanning electron microscope. Figure 1 (a) is a view showing an image when observing mainly carbon black and fibrous carbon. Figure 1 (b) is an image when observing mainly graphite.

### EMBODIMENTS OF THE INVENTION

### (First Embodiment)

Figure 1 shows images when observing a cut-out section of a negative electrode plate in a lead-acid battery of a first embodiment by a scanning electron microscope. It is shown in the overall images that particles with a size of the order of several µms which appear to be relatively white are crystals of lead and lead sulfate, among which carbon is present. In the part of region A in Figure 1 (a), carbon black is deposited on the surfaces of active material particles in such a manner as to stick thereto and in region C, long and narrow fibrous carbon (hereinafter referred to as "fibrous carbon") is present. In region B, both carbon black and fibrous carbon are present. In region D of Figure 1 (b) which is another part of the same active material, graphite that is relatively large compared to the lead active material is present.

Each carbon has a different existence form in the active material, but a conductivity can be imparted by contacting passive lead sulfate crystals with each other or contacting a lead sulfate crystal with a lead crystal, and the resulting effect varies depending on the contact form.

Because of the fine particles, carbon black easily directly contacts the surface of lead sulfate that is resistant when charged, and significantly contributes to an improvement in conductivity of the negative active material. However, even though carbon black is added to the negative active material in a large amount, it escapes from pores in the negative active material with the movement of an electrolyte solution, and its effect does not last. On the other hand, fibrous carbon is larger than carbon black, and therefore resides in the negative active material for a longer time period and accordingly, its effect is more likely to last. In addition, fibrous carbon is entangled with carbon black and has an effect of inhibiting carbon black from escaping to outside the active material.

Thus, by using carbon black and fibrous carbon in mixture, the distance between crystals of lead sulfate which can impart a conductivity expands to a distance as long as the length of fibrous carbon as compared to carbon black alone.

Figure 1 (b) shows graphite in the negative electrode plate. Graphite is conductive carbon which appears to be layered when viewed with its magnified cross section, and is very large as compared to carbon black and fibrous carbon.

Graphite has a high conductivity, and is huge as compared to carbon black and fibrous carbon. Thus, by using carbon black, fibrous carbon and graphite in mixture, a very broad current path can be secured even when the distance between lead sulfates is longer than fibrous carbon. For example, even crystals of lead sulfate existing in isolation from the conductivity network can be covered.

Thus, the lead-acid battery of the first embodiment comprises a negative electrode plate having a mixed negative active material, carbon black, fibrous carbon and graphite, whereby even if lead sulfate that is resistant due to charge-discharge in a partial state of charge increases, the conductivity of the negative electrode plate does not decrease, and a degradation in life property of the lead-acid battery can be suppressed. The life property can be evaluated according to an index called a "PSOC (Partial State of Change) life cycle number", and the test is called a PSOC test, and will be described later for details.

### -Preferred numerical range-

There exist preferred numerical ranges of sizes and amounts for the microparticulate material (carbon black), the fibrous material (fibrous carbon) and the macroparticulate material (graphite) that are added in the negative active material. The present inventors have examined preferred numerical ranges from the results of the PSOC test described later, and therefore only the results are briefly described here. However, numerical values and numerical ranges mentioned in Examples are only one example, and there may be a case where the same effect is exhibited even beyond those numerical ranges.

The average primary particle size of the microparticulate material is preferably 10 nm or more and 120 nm or less, particularly 10 nm or more and 100 nm or less. The content thereof is preferably 0.05% or more and 2.2% or less, particularly 0.1% or more and 2.0% or less based on the mass of the negative active material. Here, the primary particle size is the diameter of a single particle which does not agglomerate (hereinafter referred to a "primary particle"), and the average primary particle size is a value obtained by arithmetically averaging the diameters of the primary particles. Specifically, multiple carbon blacks are photographed by an electron microscope and, for example, 100 carbon blacks are randomly extracted. Long axis diameter and short axis diameter are measured and their arithmetic average is calculated for each, and designated as primary particle size of that microparticulate material, and the values of those primary particle sizes are arithmetically averaged.

The fibrous material has an average diameter of 300 nm or less given that the cross section in the single axis direction is circular, and the average length is preferably 1 µm or more, particularly 2 µm or more and 20 µm or less. The content thereof is preferably 0.05% or more and 1.0% or less based on the mass of the negative active material. Here, the average length is a value obtained by arithmetically averaging the lengths in the long axis direction. Specifically, multiple fibrous carbons are photographed by an electron microscope and, for example, 100 fibrous carbons are randomly extracted. The lengths of the multiple fibrous carbons are measured, and the values thereof are arithmetically averaged.

The average particle size of the conductive material (graphite) is preferably 20 µm or more, particularly 50 µm or more and 200 µm or less. The content thereof is preferably 0.02% or more and 2.0% or less, particularly 0.05% or more and 2.0% or less based on the mass of the negative active material. Here, the average particle size is a value obtained by arithmetically averaging the diameters of particles of graphite. Specifically, multiple graphites are photographed by an electron microscope and, for example, 100 graphites are randomly extracted. Long axis diameter and short axis diameter are measured and their arithmetic average is calculated for each, and designated as particle size of the graphite, and the values of those particle sizes are arithmetically averaged.

The sum of the added amounts of the microparticulate material, fibrous material and macroparticulate material is preferably 0.62 parts by mass or more and 5.2 parts by mass or less per 100 parts by mass of negative active material calculated as lead metal.

A carbonaceous material other than graphite, tin, lead, an alloy containing tin and an alloy containing lead may be used as an alternative material for the conductive material.

For examining the content of each carbon contained in the negative electrode plate, the weight of the negative electrode plate may be measured after separating only each carbon therefrom.

### (Second Embodiment)

The negative electrode plate of the lead-acid battery of the present invention is produced through (1) a blending step (S1), (2) a mixing step (S2), (3) a filling and curing/drying step (S3) and (4) a formation step (S4) in this order as described below.

### (1) Blending step S1

A lead powder composed of a mixture of lead and lead oxide, carbon black, fibrous carbon, graphite and additives such as lignin, barium sulfate and PP (polypropylene) fibers are mixed. Here, the average primary particle size of carbon black is preferably 10 nm or more and 100 nm or less, and the content thereof is preferably 0.1% or more and 2.0% or less based on the mass of the negative active material. The average length of fibrous carbon is preferably 2 µm or more, and the content thereof is preferably 0.05% or more and 1.0% or less based on the mass of the negative active material. The average particle size of graphite is preferably 50 µm or more, and the content thereof is preferably 0.05% or more and 2.0% or less based on the mass of the negative active material.

### (2) Mixing step S2

The mixture obtained in the step S1 is mixed while adding water thereto, followed by adding dropwise diluted sulfuric acid and mixing the resultant mixture again (S2). A paste of negative active material is thereby obtained.

### (3) Filling and curing/drying step S3

The paste of negative active material obtained in the step S2 is filled in a lattice composed of a lead-calcium-tin alloy and having a thickness of 2.0 mm, cured under a predetermined temperature and humidity, and then dried at about 50°C.

### (4) Formation step S4

The formation step S4 may be carried out by placing in a diluted sulfuric acid electrolyte solution an unformed negative electrode plate after undergoing the curing/drying step of the step S3, and passing a direct current between the negative electrode plate and a positive electrode. In this step, unformed positive and negative electrode plates may be formed before assembly, or unformed positive and negative electrode plates may be formed after being incorporated into a container by a usual method. In the case of formation before assembly, the formed positive and negative electrode plates may be washed with water and dried, and then assembled into a battery.

### -Example 1-

A method for producing a lead-acid battery using the negative electrode plate for a lead-acid battery will be described below. (A1) carbon black, (B1) fibrous carbon and (C1) graphite described below are used to produce negative electrode plates for lead-acid battery, respectively, by the procedure described in the above second embodiment. However, as additives thereof, lignin is used in an amount of 0.2% based on the mass of lead powder, barium sulfate is used in an amount of 0.5% based on the mass of lead powder, and PP fibers are used in an amount of 0.1% based on the mass of lead powder.

### (A1) Carbon black

Carbon black having an average primary particle size of 10 nm, 20 nm, 40 nm, 100 nm or 120 nm is used.

### (B1) Fibrous carbon

Fibrous carbon having an average length of 1 µm, 2 µm, 5 µm or 20 µm is used. Here, the average diameter is 150 nm given that the cross section of each fibrous carbon in the single axis direction is circular.

### (C1) Graphite

Graphite having an average particle size of 20 µm, 50 µm, 75 µm or 100 µm is used.

Here, the total amount of carbon contained in this negative electrode plate, namely the sum of the contents of (A1) carbon black, (B1) fibrous carbon and (C1) graphite (hereinafter referred to as "sum of the contents of three kinds of carbon") is, for example, about 1.50% based on the mass of negative active material.

For comparison, negative electrode plates of the following <Conventional Example> and <Comparative Example 1> to <Comparative Example 5> were prepared as Conventional Example and Comparative Examples.

<Conventional Example> Carbon black having an average primary particle size of 40 nm is used in an amount of 1.50 % based on the mass of negative active material.
<Comparative Example 1> Carbon black having an average primary particle size of 40 nm is used in an amount of 0.75 % based on the mass of negative active material and fibrous carbon having an average length of 5 µm is used in an amount of 0.75% based on the mass of negative active material.
<Comparative Example 2> Carbon black having an average primary particle size of 40 nm is used in an amount of 0.75 % based on the mass of negative active material and graphite having an average particle size of 75 µm is used in an amount of 0.75% based on the mass of negative active material.
<Comparative Example 3> Fibrous carbon having an average length of 5 µm is used in an amount of 1.50% based on the mass of negative active material.
<Comparative Example 4> Fibrous carbon having an average length of 5 µm is used in an amount of 0.75 % based on the mass of negative active material and graphite having an average particle size of 75 µm is used in an amount of 0.75% based on the mass of negative active material.
<Comparative Example 5> Graphite having an average particle size of 75 µm is used in an amount of 1.50% based on the mass of negative active material.

Next, using the unformed negative electrode plates for a lead-acid battery prepared as described above, valve regulated single cell lead-acid batteries were produced, respectively, in accordance with the following procedures (i) to (iii).

(i) One unformed negative electrode plate for a lead-acid battery is covered with a glass separator.
(ii) The separator of (i) is sandwiched between two unformed positive electrode plates prepared by a routine method, and inserted into a container under pressure to be fixed. Thereafter, an upper lid having a function of a control valve is mounted on the container. This configuration is designated as a single cell battery.
(ii) Thereafter, a predetermined amount of diluted sulfuric acid is added to the single cell battery, and a necessary amount of electricity is passed to accomplish formation. A valve regulated single cell lead-acid battery is thereby obtained.

For the valve regulated single cell lead-acid batteries, the PSOC test was conducted in accordance with the following procedures (a) to (d) to make evaluations. This test was conducted with the valve regulated single cell lead-acid battery immersed to approximately the height of the positive and negative electrode plates for a lead-acid battery in a water bath controlled to about 25°C. Provided that the one-hour-rate capacity of the battery is 4Ah,
(a) First, the battery is discharged at 4A for 6 minutes.
(b) Next, the battery is discharged at 4A for 18 minutes.
(c) Next, the battery is charged at 4A for 18 minutes.
(d) The procedures (b) and (c) described above are repeated, and the time when the voltage of the valve regulated single cell lead-acid battery at 18 minutes attains 1.0 [V] in the procedure (b) is considered as the end of life, and the PSOC test is terminated. Here, one set of the procedures (b) and (c) is designated as one cycle and the cycle number at which the PSOC test is terminated is designated as a PSOC life cycle number. The test results are shown in Table 1.

In Table 1, No. 1, No. 2, No. 3, No. 4, No. 5 and No. 6 show measurement results for lead-acid batteries using carbon of the above-mentioned <Conventional Example>, <Comparative Example 1>, <Comparative Example 2>, <Comparative Example 3>, <Comparative Example 4> and <Comparative Example 5>, respectively. The ratio [%] where the PSOC life cycle number of No. 1 is 100 is a value rounded off after the decimal point. In the columns of evaluations are shown the results of the PSOC life cycle numbers compared to No. 1 of Conventional Example, wherein ⊙ corresponds to "significantly improved", ○ corresponds to "improved", Δ corresponds to "somewhat improved", × corresponds to "not improved" and - corresponds to "not evaluated". Specifically, ⊙ is given when the ratio [%] where the PSOC life cycle number of No. 1 is 136 or more, ○ is given when the ratio [%] is 106 or more and 135 or less, Δ is given when the ratio [%] is 101 or more and 105 or less and × is given when the ratio [%] is 100 or less. The content shows a mass ratio based on the mass of the negative active material.

**[Table 1]**

| No. | The total of the contents of three kinds of carbon (1.50% by mass) | | | | | | Ratio [%] where the PSOC life cycle number of No. 1 is 100 | Evaluation |
|---|---|---|---|---|---|---|---|---|
| | Carbon black | | Fibrous carbon | | Graphite | | | |
| | Average primary particle size (nm) | Content | Average length (µm) | Content | Average particle size (µm) | Content | | |
| 1 | 40 | 1.50 | - | - | - | - | 100 | - |
| 2 | 40 | 0.75 | 5 | 0.75 | - | - | 103 | Δ |
| 3 | 40 | 0.75 | - | - | 75 | 0.75 | 99 | × |
| 4 | - | | 5 | 1.50 | - | - | 90 | × |
| 5 | - | | 5 | 0.75 | 75 | 0.75 | 85 | × |
| 6 | - | | - | - | 75 | 1.50 | 80 | × |
| 7 | 10 | 0.50 | 2 | 0.50 | 50 | 0.50 | 108 | ○ |
| 8 | 40 | 0.50 | 1 | 0.50 | 50 | 0.50 | 109 | ○ |
| 9 | 40 | 0.50 | 2 | 0.50 | 20 | 0.50 | 107 | ○ |
| 10 | 120 | 0.50 | 2 | 0.50 | 50 | 0.50 | 110 | ○ |
| 11 | 20 | 0.50 | 2 | 0.50 | 50 | 0.50 | 140 | ⊙ |
| 12 | 40 | 0.50 | 2 | 0.50 | 50 | 0.50 | 141 | ⊙ |
| 13 | 40 | 0.50 | 5 | 0.50 | 75 | 0.50 | 140 | ⊙ |
| 14 | 40 | 0.50 | 5 | 0.50 | 150 | 0.50 | 145 | ⊙ |
| 15 | 40 | 0.50 | 20 | 0.50 | 75 | 0.50 | 150 | ⊙ |
| 16 | 100 | 0.50 | 2 | 0.50 | 50 | 0.50 | 139 | ⊙ |

From Table 1, the PSOC lifer cycle numbers will be discussed below in comparison with No. 1 of Conventional Example. First, it is found from Table 1 that No. 4 and No. 6 containing one kind of carbon and also No. 2, No. 3 and No. 5 containing two kinds of carbon do not have improved PSOC life cycle numbers as compared to No. 1 of Conventional Example.

However, it is found that No. 7 to No. 16 containing three kinds of carbon have significantly improved PSOC life cycle numbers as compared to No. 1 of Conventional Example. It is found that the PSOC life cycle number is significantly improved especially when the average primary particle size of carbon black is 10 nm, 40 nm or 100 nm, the average length of fibrous carbon is 2 µm, 5 µm or 20 µm and the average particle size of graphite is 50 µm, 75 µm or 150 µm. It is considered that when the contents of carbon black, fibrous carbon and graphite are each made constant, combination of the average primary particle size of carbon black, the average length of fibrous carbon and the average particle size of graphite causes a variation in the degree of dispersion of carbon black, fibrous carbon and graphite in the overall negative active material, the degree of contact between those carbon and lead sulfate and coordination of the conductivities of those carbon, so that generally a broader conductivity network can be established and retained for a long time period.

From the above, it is found that by adjusting the average primary particle size of carbon black, the average length of fibrous carbon and the average particle size of graphite and including those carbon in the negative active material, those carbon can be efficiently dispersed in the overall negative active material, efficiently contacted with lead sulfate and efficiently coordinated to improve the PSOC life cycle number. It is found from Table 1 that it is desirable to meet all of the following requirements of (I) to (III).

(I) The average primary particle size of carbon black is 10 nm, 20 nm, 40 nm or 100 nm, and the content thereof is 0.5% based on the mass of negative active material.
(II) The average length of fibrous carbon is 2 µm, 5 µm or 20 µm, and the content thereof is 0.5% based on the mass of negative active material.
(III) The average particle size of graphite is 50 µm, 75 µm or 150 µm, and the content thereof is 0.5% based on the mass of negative active material.

### -Example 2-

Example 2 will now be described as Example other than Example 1. First, using (A2) carbon black, (B2) fibrous carbon and (C2) graphite, the valve regulated single cell lead-acid battery is produced in the same manner as in Example 1.

### (A2) Carbon black

Carbon black having an average primary particle size of 40 is used. The added amount of carbon black is 0.05%, 0.10%, 0.30%, 0.50%, 1.00%, 2.00% or 2.20% based on the mass of negative active material.

### (B2) Fibrous carbon

Fibrous carbon having an average length of 5 µm is used. Here, the cross section of each fibrous carbon is approximately circular , and the average of the diameters thereof is 150 nm. The added amount of fibrous carbon is 0.02%, 0.05%, 0.30%, 0.50%, 1.00% or 1.20% based on the mass of negative active material.

### (C2) Graphite

Graphite having an average particle size of 75 µm is used. The added amount of graphite is 0.02%, 0.05%, 0.30%, 0.50%, 1.00%, 2.00% or 2.20% based on the mass of negative active material.

Valve regulated single cell lead-acid batteries were prepared in the same manner as in example 1, and the PSOC test was conducted to make evaluations. The test results are shown in Table 2.

No. 1 in Table 2 shows the measurement results for the lead-acid battery using the carbon of <Conventional Example> described above. No. 13 is same as No. 13 of Table 1, and is described for reference. The columns of the ratio [%] where the PSOC life cycle number of No. 1 is 100 and evaluation are described in the same manner as in Table 1. The content shows a mass ratio based on the mass of the negative active material.

**[Table 2]**

| No. | Content (% by mass) | | | | Ratio [%] where the PSOC life cycle number of No. 1 is 100 | Evaluation |
|---|---|---|---|---|---|---|
| | A (40 nm) (Carbon black) | B (5 µm) (Fibrous carbon) | C (75 µm) (Graphite) | The total of the contents of three kinds of carbon | | |
| 1 | 1.50 | - | - | 1.50 | 100 | - |
| 13 | 0.50 | 0.50 | 0.50 | 1.50 | 140 | ⊙ |
| 21 | 0.05 | 0.30 | 0.30 | 0.65 | 120 | ○ |
| 22 | 0.30 | 0.02 | 0.30 | 0.62 | 121 | ○ |
| 23 | 0.30 | 0.30 | 0.02 | 0.62 | 130 | ○ |
| 24 | 0.10 | 0.50 | 0.05 | 0.65 | 143 | ⊙ |
| 25 | 1.00 | 0.05 | 0.05 | 1.10 | 160 | ⊙ |
| 26 | 0.10 | 1.00 | 0.05 | 1.15 | 150 | ⊙ |
| 27 | 0.10 | 0.05 | 1.00 | 1.15 | 145 | ⊙ |
| 28 | 0.10 | 1.20 | 0.05 | 1.35 | 120 | ○ |
| 29 | 2.00 | 0.05 | 0.05 | 2.10 | 140 | ⊙ |
| 30 | 0.10 | 0.05 | 2.00 | 2.15 | 150 | ⊙ |
| 31 | 2.20 | 0.05 | 0.05 | 2.30 | 130 | ○ |
| 32 | 0.10 | 0.05 | 2.20 | 2.35 | 121 | ○ |
| 33 | 1.00 | 0.50 | 1.00 | 2.50 | 185 | ⊙ |
| 34 | 2.00 | 1.00 | 0.05 | 3.05 | 160 | ⊙ |
| 35 | 0.10 | 1.00 | 2.00 | 3.10 | 145 | ⊙ |
| 36 | 1.00 | 1.00 | 2.00 | 4.00 | 170 | ⊙ |
| 37 | 2.00 | 1.00 | 1.00 | 4.00 | 180 | ⊙ |
| 38 | 2.00 | 0.05 | 2.00 | 4.05 | 150 | ⊙ |
| 39 | 2.00 | 0.50 | 2.00 | 4.50 | 165 | ⊙ |
| 40 | 2.00 | 1.00 | 2.00 | 5.00 | 150 | ⊙ |
| 41 | 2.00 | 1.00 | 2.20 | 5.20 | 135 | ○ |
| 42 | 2.00 | 1.20 | 2.00 | 5.20 | 135 | ○ |
| 43 | 2.20 | 1.00 | 2.00 | 5.20 | 134 | ○ |

From Table 2, the PSOC lifer cycle numbers will be discussed below in comparison with No. 1 of Conventional Example. First, it is also found that if three kinds of carbon, i.e. carbon black, fibrous carbon and graphite are contained in the negative electrode plate, the PSOC life cycle number is improved as compared to No. 1 of Conventional Example as long as their total content is approximately half that of Conventional Example or more, with reference to No. 1 of Conventional Example in common with Table 1 and No. 13. In the present measurement, it is found that No. 33 in which the content of carbon black is 1.00%, the content of fibrous carbon is 0.50% and the content of graphite is 1.00% has the best PSOC life cycle number, 185[%] relative to No. 1 of Conventional Example.

It is considered that when the average primary particle size of carbon black, the average length of fibrous carbon and the average particle size of graphite are each made constant, combination of the contents of carbon black, fibrous carbon and graphite causes a variation in the degree of dispersion of carbon black, fibrous carbon and graphite in the overall negative active material, the degree of contact between those carbon and lead sulfate and coordination of the conductivities of those carbon, so that the configurations of current paths in the overall negative active material are mutually different.

From the above, it is found that by adjusting the contents of carbon black, fibrous carbon and graphite and including them in the negative active material, they can be efficiently dispersed in the overall negative active material, efficiently contacted with lead sulfate and efficiently coordinated to improve the PSOC life cycle number. It is found from Table 2 that it is desirable to meet all of the following requirements of (IV) to (VI).

(IV) The average primary particle size of carbon black is 40 nm, and the content thereof is 0.10%, 0.30%, 0.50%, 1.00% or 2.00% based on the mass of negative active material.
(V) The average length of fibrous carbon is 5 µm, and the content thereof is 0.05%, 0.30%, 0.50% or 1.00% based on the mass of negative active material.
(VI) The average particle size of graphite is 75 µm, and the content thereof is 0.05%, 0.30%, 0.50%, 1.00% or 2.00% based on the mass of negative active material.

### (Conclusion)

From Example 1 and Example 2 above, it has been found that by adjusting the average primary particle size of carbon black, the average length of fibrous carbon and the average particle size of graphite and adding them to the negative active material, the PSOC life cycle number can be improved. Conditions for which improvement of the PSOC life cycle can be expected are combinations of (A), (B) and (C) below.

### (A) Carbon black

The average primary particle size of carbon black is 10 nm or more and 120 nm or less (particularly preferably 10 nm or more and 100 nm or less), and the added amount of carbon black is 0.05% or more and 2.2% or less (particularly preferably 0.10% or more and 2.00% or less) based on the mass of negative active material.
Carbon black is classified into some types depending on the production method, but the use of any of furnace black, channel black, thermal black, acetylene black and the like resulted in the similar effect as long as the particle size is similar.

### (B) Fibrous carbon

The average length of fibrous carbon is at least 1 µm (particularly preferably 2 µm or more and 20 µm or less, and the added amount of fibrous carbon is 0.05% or more and 1.00% or less based on the mass of negative active material. For fibrous carbon, irrespective of classification of carbon, the use of any type of carbon resulted in the similar effect as long as it is in the form of whiskers or fibers and the average length is similar.

### (C) Graphite

The average particle size of graphite is 50 µm or more, and the added amount of graphite is 0.05% or more and 2.00% or less based on the mass of negative active material.
Graphite may be classified into artificial graphite, natural graphite, expanded graphite, expansion graphite and the like, but the use of any type thereof resulted in the similar effect as long as the average particle size is similar.
Moreover, an alternative material for "graphite", which may be used, has such a property that a change in shape when contacting an electrolyte solution is small. Preferable are those consisting of a material having a low solubility in an electrolyte solution. Specifically, mention is made of a carbonaceous material other than graphite, tin, lead, an alloy containing tin and an alloy containing lead. However, graphite is preferable compared to tin, lead, a tin alloy and a lead alloy. This is because a change in shape when contacting an electrolyte solution is extremely small, and the material cost is low. The use of tin, lead, a tin alloy or a lead alloy, in place of the graphite of example 1 and example 2 described above, results in the similar effect. Macroparticulate materials consisting of tin, lead, a tin alloy and a lead alloy as an alternative material for graphite can be produced by forming each metal into a foil having a thickness of, for example, 100 µm by rolling and grinding the same by a microcutter or a mill. Moreover, the metal may be processed into a predetermined shape and size by pressing or the like as required. A classification step may be carried out for controlling the average particle size to fall within a predetermined range. The classification step can be carried out using, for example, a sieve.

### INDUSTRIAL APPLICABILITY

The present invention significantly improves the life property of a lead-acid battery and particularly, can suppress a degradation in life property of the lead-acid battery even if the battery is used under such severe conditions that charge-discharge is repeated in a partial state of charge, and therefore industrial applicability by carrying out the present invention is extremely significant.

### REFERENCE SIGNS LIST

- A: region containing only carbon black
- B: region containing only carbon black and fibrous carbon
- C: region containing only fibrous carbon
- D: region of graphite

## Claims

1. A negative electrode plate for a lead-acid battery which comprises a negative active material, wherein said negative active material is provided with lead sulfate particles, and contains all of a microparticulate material A deposited on surfaces of said lead sulfate particles to impart a conductivity, a fibrous material B crosslinking between crystals of said lead sulfate to impart a conductivity and a macroparticulate material C having a low solubility in an electrolyte solution of said lead-acid battery and a size greater than said fibrous material B.

2. The negative electrode plate for a lead-acid battery according to claim 1, wherein said fibrous material B contacts at least two lead sulfate particles, and said macroparticulate material C contacts at least three lead sulfate particles.

3. The negative electrode plate for a lead-acid battery according to claim 1, wherein said microparticulate material A, said fibrous material B and said macroparticulate material C are all composed of substantially the same element composition.

4. The negative electrode plate for a lead-acid battery according to claim 3, wherein said microparticulate material A, said fibrous material B and said macroparticulate material C are all composed of carbon atoms.

5. The negative electrode plate for a lead-acid battery according to claim 4, wherein said microparticulate material A is carbon black, said fibrous material B is fibrous carbon and said macroparticulate material C is graphite.

6. The negative electrode plate for a lead-acid battery according to claim 1, wherein said macroparticulate material C is a carbonaceous material (other than graphite), tin, lead, an alloy containing tin and an alloy containing lead.

7. The negative electrode plate for a lead-acid battery according to claim 1 or 5, wherein the arithmetic averages of long axis diameters and short axis diameters of said microparticulate material A is 10 nm or more and 120 nm or less.

8. The negative electrode plate for a lead-acid battery according to claim 1 or 5, wherein the average particle size of said microparticulate material A is 10 nm or more and 120 nm or less.

9. The negative electrode plate for a lead-acid battery according to claim 7 or 8, wherein the content of said microparticulate material A is 0.05 parts by mass or more and 2.2 parts by mass or less per 100 parts by mass of negative active material calculated as lead metal.

10. The negative electrode plate for a lead-acid battery according to claim 1 or 5, wherein the average length of said fibrous material B is 1 µm or more and 20 µm or less.

11. The negative electrode plate for a lead-acid battery according to claim 10, wherein the content of said fibrous material B is 0.02 parts by mass or more and 1.2 parts by mass or less per 100 parts by mass of negative active material calculated as lead metal.

12. The negative electrode plate for a lead-acid battery according to claim 1 or 5, wherein the average particle size of said macroparticulate material C is 20 µm or more and 200 µm or less.

13. The negative electrode plate for a lead-acid battery according to claim 12, wherein the content of said macroparticulate material C is 0.02 parts by mass or more and 2 parts by mass or less per 100 parts by mass of negative active material calculated as lead metal.

14. The negative electrode plate for a lead-acid battery according to claim 5, wherein the sum of the contents of said microparticulate material A, said fibrous material B and said macroparticulate material C is 0.62 parts by mass or more and 5.2 parts by mass or less per 100 parts by mass of negative active material calculated as lead metal.

15. The negative electrode plate for a lead-acid battery according to claim 5, wherein the average primary particle size of said carbon black is 10 nm or more and 100 nm or less, and the content of said carbon black is 0.1% or more and 2.0% or less based on the mass of the negative active material.

16. The negative electrode plate for a lead-acid battery according to claim 5, wherein the average length of said fibrous carbon is 2 µm or more, and the content of said fibrous carbon is 0.05% or more and 1.0% or less based on the mass of the negative active material.

17. The negative electrode plate for a lead-acid battery according to claim 5, wherein the average particle size of said graphite is 50 µm or more, and the content of said graphite is 0.05% or more and 2.0% or less based on the mass of the negative active material.

18. A lead-acid battery comprising the negative electrode plate for a lead-acid battery according to claim 1 or 5.

19. A method for producing a negative electrode plate for a lead-acid battery comprising a blending step of mixing a lead powder consisting of a mixture of lead and lead oxide, a conductive microparticulate material A having an average particle size of 10 nm or more and 120 nm or less, a conductive fibrous material B having an average length of 1 µm or more and 20 µm or less, a macroparticulate material C having an average particle size of 20 µm or more and 200 µm or less, and other additives.

20. The method for producing a lead-acid battery according to claim 19, wherein said microparticulate material A in said blending step is carbon black, said fibrous material B is fibrous carbon, said macroparticulate material C is graphite, the contents of said microparticulate material A, said fibrous material B and said macroparticulate material C are 0.05 parts by mass or more and 2.2 parts by mass or less, 0.02 parts by mass or more and 1.2 parts by mass or less and 0.02 parts by mass or more and 2 parts by mass or less, respectively, per 100 parts by mass of negative active material calculated as lead metal.

21. The method for producing a lead-acid battery according to claim 20, wherein the total of the contents of said microparticulate material A, said fibrous material B and said macroparticulate material C is 0.62 parts by mass or more and 5.2 parts by mass or less.
